# EUROPÄISCHE PATENTSCHRIFT

(11) **EP 0 881 105 B1**
(45) Veröffentlichungstag und Bekanntmachung des Hinweises auf die Patenterteilung: **03.12.2003**
(21) Anmeldenummer: 98109297.6
(22) Anmeldetag: 22.05.1998
(51) Int. Cl.: B60C 17/00, B60C 15/02, B60C 13/00, B60C 9/09, B60C 9/14

(54) **Fahrzeugluftreifen**
Vehicle pneumatic tyre
Bandage pneumatique pour véhicule

(30) Priorität: 30.05.1997 DE 19722521
(43) Veröffentlichungstag der Anmeldung: 02.12.1998
(73) Patentinhaber: Continental Aktiengesellschaft, 30165 Hannover (DE)
(72) Erfinder: Peda, Karl, 31515 Wunstorf (DE)

(56) Entgegenhaltungen:
- EP-A- 0 140 074
- EP-A- 0 273 056
- EP-A- 0 314 445
- DE-A- 2 241 040
- DE-A- 2 331 530
- DE-A- 3 307 960
- LU-A- 45 333
- US-A- 3 841 375
- US-A- 5 078 192

## Beschreibung

Die Erfindung betrifft Fahrzeugluftreifen in Radialbauart mit einer zumindest einlagig ausgeführten Karkasse, die in Wulstbereichen mittels Kernen verankert ist, einem insbesondere mehrlagig ausgeführten Gürtel, einem profilierten Laufstreifen und Seitenwänden, wobei jede Seitenwand zusätzlich zur Karkasse mit zumindest einem Verstärkungsprofil oder zumindest einer Verstärkungslage versteift ist.

Ein derartiger Reifen ist aus der DE-A-23 31 530 bekannt. Die Seitenwände des Reifens und vorzugsweise auch der Laufflächenbereich sind durch Verstärkungsprofile aus Gummi, die insbesondere auf der Innenseite des Reifens aufgebracht werden, großflächig verstärkt. Zusätzlich sind Versteifungselemente vorgesehen, die von den Wulstbereichen ausgehend in die Seitenwände hinein verlaufen. Diese insgesamt sehr massive Verstärkung des Reifens soll bei einem Luftverlust eine Selbsttragefähigkeit sicherstellen, die ein Ausbeulen der Seitenwände verhindert und eine breite Aufstandsfläche des Reifens am Untergrund gewährleistet.

Aus der US-A-3,841,375 ist ein Reifen mit Notlaufeigenschaften bekannt, dessen Seitenwände über einen Großteil ihrer Erstreckung aus seinem Gummimaterial hoher Elastizität bestehen. Zusätzlich können die Schulterbereiche innenseitig mit Gummipolstern verstärkt sein. Bei drucklosem Reifen soll durch diese Maßnahme die Wärmeentwicklung vermindert werden.

Ein Fahrzeugrad mit Notlaufeigenschaften ist aus der EP-A-0 140 074 bekannt, wobei der Reifen Wulstkerne besitzt, die in den Wulstbereichen exzentrisch in der Weise angeordnet sind, daß bei montiertem Reifen der Reifeninnendurchmesser im Wulstbereich kleiner ist als beim Reifen während der Montage. Dieser Reifen wird ferner auf einer Felge montiert, die mit einem axial innerhalb der Wulstsitzflächen der Felge angeordneten Stützteil versehen ist, welcher einen gegenüber dem von den Felgenhörnern gebildeten Durchmesser größeren Durchmesser besitzt. In der Notlaufstellung, im Falle einer Reifenpanne, stützt sich der Reifen mit seiner Innenwand auf dem Stützteil an der Felge ab. Aufgrund des sehr flachen Verlaufes der Reifenseitenwände im Bereich der Felgenhörner wölben sich die Seitenwände seitlich aus und es wird ein Fahrbahnkontakt oder ein Kontakt mit den inneren Seitenwänden vermieden.

Bei einer weiteren, aus dem Stand der Technik bekannten Lösung zur Erzielung von Notlaufeigenschaften wird die Felge derart gestaltet, daß sie radial nach innen erstreckende Felgenhörner und neben diesen am inneren Umfang Sitzflächen für die Wulstbereiche des Reifens aufweist. Bei einer derartigen, beispielsweise aus der DE-A-32 46 131 bekannten Lösung, wird zusätzlich die radial äußere Mantelfläche der Felge als Stützfläche für den Reifen bei einem Notlauf gebildet.

Diese, aus dem Stand der Technik bekannten Lösungen zur Sicherstellung einer gewissen Fahrfähigkeit im drucklosen Zustand des Reifens kommen nun ohne speziell gestaltete Felgen, insbesondere auch ohne das Vorsehen von Stützflächen auf den Felgen, nicht aus.

Die Erfindung hat sich daher nun die Aufgabe gestellt, einen Reifen der eingangs genannten Art so zu gestalten, daß er im drucklosen Zustand zumindest über eine gewisse Distanz fahrfähig bleibt, wobei aber eine Montage des Reifens auf einer herkömmlichen Standardfelge und nach der Standardmethode möglich sein soll und wobei das Fahrverhalten und der Fahrkomfort verbessert werden.

Gelöst wird die gestellte Aufgabe erfindungsgemäß dadurch, dass die Reifenseitenwände von den Wulstbereichen ausgehend vorerst flach unter einem Winkel von 0° bis 20° zur axialen Richtung nach außen verlaufen und innerhalb ihres zwischen 50 und 90% der Reifenquerschnittshöhe verlaufenden Bereiches am biegesteifsten ausgeführt sind, wobei ihre Biegesteifigkeit vom Gürtel bis zu den Wülsten abnimmt, und wobei im eingefederten, drucklosen Zustand des Reifens die Reifenwülste in Kontakt mit der Innenseite des Reifens treten und sich die Reifenseitenwände unter Ausbildung einer vom Untergrund aufwärts Seitenwandfalte verformen.

Aufgrund der erfindungsgemäßen Ausführung der Reifenseitenwände und aufgrund des flachen Übergangsbereiches von Wulst zu Seitenwand, was ein Abstützen der Reifeninnenwand im Bereich radial innerhalb des Laufstreifens auf den Reifenwulstbereichen ermöglicht, können sich die Reifenseitenwände im drucklosen Zustand des Reifens so verformen, daß sich eine Seitenwandfalte bildet, die vom Untergrund weg ragt. Die Reifenseitenwände treten daher nicht in Kontakt mit dem Untergrund. Die Felge, auf der der Reifen montiert wird, kann eine der herkömmlichen Standardfelgen sein.

Weiterhin erfolgt erfindungsgemäß die Ausgestaltung derart, dass die Biegesteifigkeit der Seitenwände vom Gürtel zu den Wulstbereichen hin gleichmäßig, abnimmt. Dies ist insbesondere für das Fahrverhalten und den Fahrkomfort des Reifens von Vorteil.

Dabei kann als erste Ausführungsform der Erfindung ein Verstärkungsprofil zwischen der Karkasse und dem Seitenwandgummi, oder auch, bei einer mehrlagigen, insbesondere zweilagigen Karkasse, zwischen den zwei Karkasslagen angeordnet werden.

Bei einer alternativen Ausführungsform der Erfindung wird zur entsprechenden Beeinflussung der Biegesteifigkeit der Seitenwände in jeder Reifenseitenwand zumindest eine Gewebelage eingebracht. Insbesondere werden mehrere und unterschiedlich breite Gewebelagen vorgesehen. Dabei werden diese Verstärkungslagen bevorzugt ebenfalls innerhalb des zwischen 50 und 90% der Reifenquerschnittshöhe verlaufenden Bereiches der Seitenwände angeordnet.

Als zusätzliche Maßnahme, die sowohl die Biegesteifigkeit im Sinne der gegenständlichen Erfindung beeinflussen kann als sich auch auf andere Reifeneigenschaften, beispielsweise dem Komfort günstig auswirken kann, werden die Reifenseitenwände derart gestaltet, daß ihre Dicke von den Schulterbereichen ausgehend bis zu den Wulstbereichen hin kontinuierlich abnimmt.

In den Wulstbereichen von erfindungsgemäß ausgeführten Reifen kann auf das Vorsehen von Kernprofilen verzichtet werden. Für eine ausreichende Steifigkeit der Wulstbereiche kann es jedoch von Vorteil sein, Kernprofile anzuordnen, die jedoch sehr kurz ausgeführt sind und, in radialer Richtung betrachtet, bis auf eine Höhe reichen, die maximal das 2,5-fache des in dieser Richtung gemessenen Durchmessers des Wulstkernes beträgt.

Die gegenständliche Erfindung betrifft ferner ein Fahrzeugrad mit einem erfindungsgemäß ausgeführten Reifen. Bevorzugt wird dabei der Reifen im Bereich der Wulstsitzflächen der Felge im drucklosen Zustand durch Haltemittel, beispielsweise durch asymmetrisch ausgeführte Humps, gehalten.

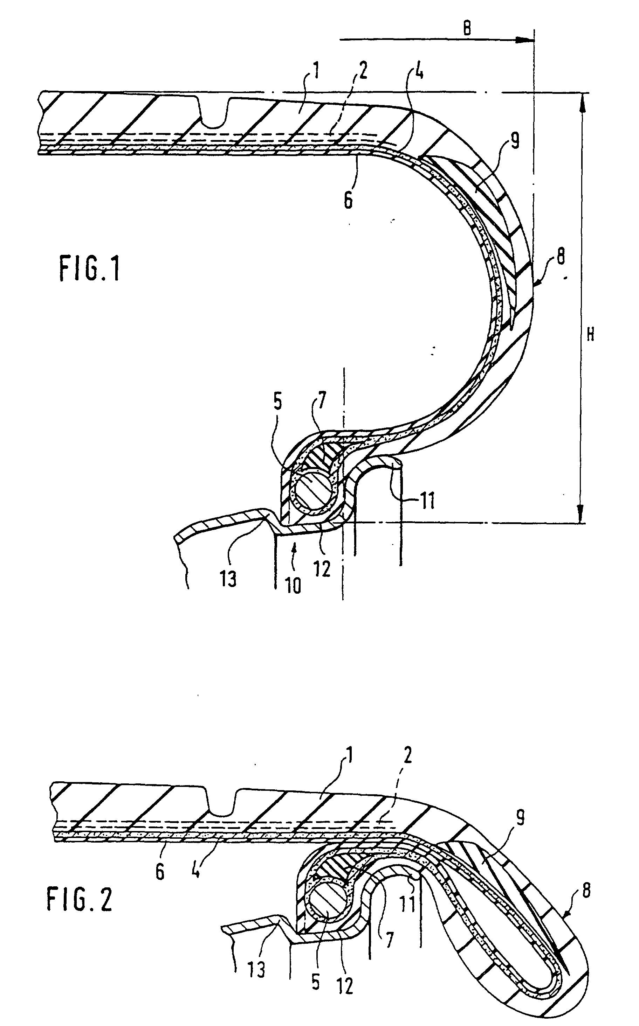

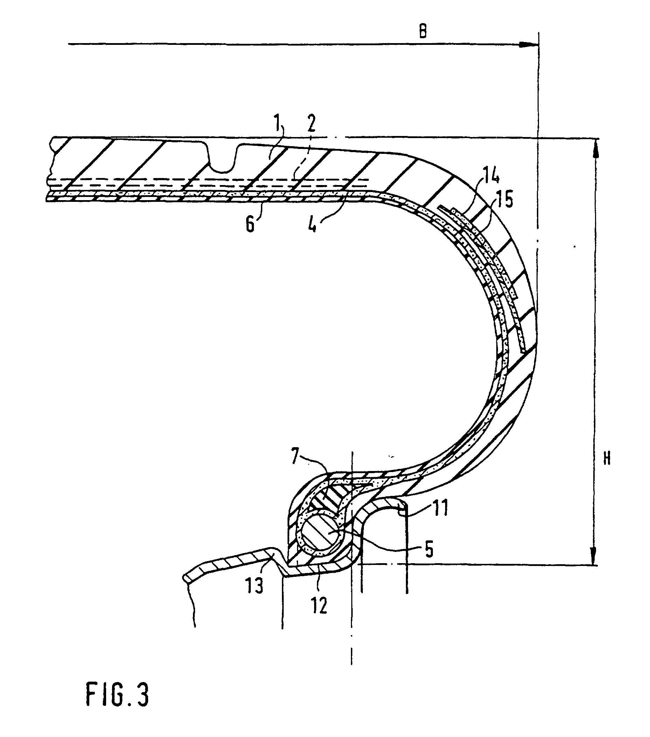

Weitere Merkmale, Vorteile und Einzelheiten der Erfindung werden nun an Hand der Zeichnung, die zwei Ausführungsbeipiele darstellt, näher beschrieben. Dabei zeigt Fig. 1 einen radialen Schnitt durch eine Hälfte eines auf einer Felge montierten Reifens, Fig. 2 den Reifen gemäß Fig. 1 im Pannenlauf und Fig. 3 ein zweites Ausführungsbeispiel eines auf einer Felge montieren Reifens ebenfalls im radialen Teilschnitt.

Es wird darauf hingewiesen, daß sich sämtliche nachfolgend erwähnten Abmessungen und Dimensionsangaben einzelner Reifenbauteile sich auf die Geometrie des aufgepumpten und unbelasteten, auf einer Felge montierten Fertigreifens beziehen und, soweit anwendbar, den E.T.R.T.O. Standards entsprechen.

Das in Fig. 1 dargestellte Fahrzeugrad besteht aus einem PKW-Radialreifen und einer starren Felge. Der Reifen umfaßt einen profilierten Laufstreifen 1, einen aus insbesondere zwei Cordgewebelagen bestehenden Gürtel 2, eine ein - oder mehrlagig ausgeführte Karkasse 4 mit textilen und/oder metallischen Festigkeitsträgern, die durch Umschlingen von zugfesten Wulstkernen 5 in den beiden Wulstbereichen des Reifens verankert ist, eine Innenplatte (6) und Seitenwände 8, wobei unter einer Seitenwand 8 nicht nur der bei der Herstellung des Reifens aufgebrachte Seitenwandteil (Seitenwandgummi), sondern der sich zwischen dem Gürtel und dem Wulstbereich erstreckende Reifenteil, inklusive Innenplatte, Karkasse etc., verstanden wird.

Die insbesondere aus Metall bestehende und einteilig ausgeführte Felge 10 kann eine Standardfelge sein und weist seitlich außen Felgenhörner 11, Sitzflächen 12 für die Reifenwülste und an diese anschließend je einen Hump 13 auf. Die Felge 10 besitzt ferner ein Tiefbett, welches jedoch nicht dargestellt ist. Die vom Eckpunktsdurchmesser der Felge zu messende Querschnittshöhe des Reifens ist mit H, die größte Reifenbreite mit B bezeichnet.

Wie oben bereits ausgeführt geht es im Rahmen der gegenständlichen Erfindung darum, im Falle einer Reifenpanne eine Weiterfahrt mit dem drucklosen Reifen über eine wesentlich längere Fahrstrecke als es mit herkömmlichen, aus dem Stand der Technik bekannten Reifen möglich ist, zu gewährleisten. So soll insbesondere verhindert werden, daß die Reifenseitenwände im drucklosen Zustand des Reifens mit dem Untergrund in Berührung kommen und, wie es bei herkömmlich gestalteten Reifen der Fall ist, innerhalb kürzester Zeit zerstört bzw. stark beschädigt werden.

Die Seitenwände 8 des Reifens sind nun so ausgeführt, daß sie innerhalb ihrer zwischen 50 und 90 % der Reifenquerschnittshöhe H verlaufenden Bereiche am steifsten ausgeführt sind. Innerhalb dieses Bereiches besitzen die Reifenwände 8 eine höhere Biegesteifigkeit als in jenem Bereich, der außerhalb zu den Wulstbereichen hin anschließt.

Dabei werden die Seitenwände 8 insbesondere derart ausgeführt, daß ihre Biegesteifigkeit, vorzugsweise beginnend bei der Randkante der breitesten Gürtellage bis zu den beiden Wulstbereichen, insbesondere bis zu ihrer ersten Kontaktstelle mit dem Felgenhorn, insbesondere möglichst gleichmäßig abnimmt.

Um im Pannenfall eine Berührung der Reifenseitenwände mit dem Untergrund verläßlich auszuschließen, wird der Reifen derart gestaltet, daß die Reifenseitenwände 8 bzw. die Karkasse 4 in den jeweiligen Wulstbereich sehr flach hinein verlaufen, so daß der Übergang vom Wulstbereich zur anschließenden Seitenwand 8 zumindest im wesentlichen in axialer Richtung erfolgt. Der zugehörige mit der axialen Richtung eingeschlossene Winkel beträgt zwischen 0 und 20°, bevorzugt zwischen 0 und 10°. Zum Laufstreifen hin besitzt jede Reifenseitenwand 8 einen etwa bogenförmigen Verlauf.

Bei den in den Zeichnungsfiguren dargestellten Ausführungsbeispielen ist radial außerhalb jedes Wulstkernes 5 ein Kernprofil 7 angeordnet, welches sehr kurz ausgeführt ist und, in radialer Richtung betrachtet, eine Erstreckung besitzt, die maximal das 2,5-fache des in dieser Richtung gemessenen Kerndurchmessers beträgt. Bei erfindungsgemäß ausgeführten Reifen kann übrigens auf diese Kernprofile auch verzichtet werden.

Um die Biegesteifigkeit der Seitenwände 8 entsprechend zu beeinflussen, werden sie versteift. Dazu gibt es eine Anzahl von Möglichkeiten, wobei in Fig. 1 und Fig. 3 zwei dieser Möglichkeiten dargestellt sind. Wie Fig. 1 zeigt, ist in jeder Seitenwand 8, vorzugsweise innerhalb des oben genannten Bereiches, ein Verstärkungsprofil 9 eingebettet. Bevorzugt verläuft dieses Verstärkungsprofil 9 vom Randbereich der breitesten Gürtellage bis zur Stelle mit der maximalen Querschnittsbreite B, kann jedoch auch weiter zum Wulstbereich zu verlaufen. Das Verstärkungsprofil 9 besteht aus Gummi und ist aus einer geeigneten Kautschukmischung gefertigt. Die Shorehärte A des Verstärkungsprofiles 9 ist insbesondere größer > 70. Im Querschnitt betrachtet ist das Verstärkungsprofil 9 so gestaltet, daß es eine breiteste Stelle besitzt, die knapp radial innerhalb des Gürtels 2 liegt, von wo aus sich seine Dicke bis zu den beiden Endbereichen kontinuierlich verringert. Beim Aufbau des Reifens kann das Verstärkungsprofil 9 dabei direkt auf die Karkasse 4 aufgelegt werden und befindet sich somit zwischen dieser und dem Seitenwandgummi. Alternativ dazu kann eine zweilagige Karkasse vorgesehen werden, wobei das Verstärkungsprofil 9 zwischen den beiden Karkasslagen angeordnet wird.

Fig. 2 zeigt den Reifen aus Fig. 1 im drucklosen Zustand, also während eines Pannenlaufes. Aufgrund der höheren Biegesteifigkeit der Seitenwand 8 in deren an den Gürtel anschließenden Bereich und der Kontur im Übergangsbereich vom Wulst zur Seitenwand bildet sich eine Seitenwandfalte, die vom Untergrund in Richtung Felge abhebt, so daß kein Kontakt der Reifenseitenwand zum Untergrund erfolgt. Insbesondere ermöglicht der erfindungsgemäß gestaltete Übergangsbereich Wulst - Seitenwand ein Abstützen des Reifenwulstes innen am Reifen im Bereich des Laufstreifenrandbereiches, wodurch die Bildung der geschilderten Seitenwandfalte unterstützt wird. Es ist günstig, wenn die Innenwand des Reifens mit einem Gleitmittelbelag versehen wird oder wenn in das Reifeninnere eine entsprechend Gleitpaste eingebracht wird.

Für das Fahrverhalten und die Komforteigenschaften des Reifens im Normalbetrieb ist es von Vorteil, wenn die Seitenwände 8 derart gestaltet werden, daß ihre Biegesteifigkeit vom Gürtel zum Wulstbereich zu möglichst gleichmäßig abnimmt. In diesem Zusammenhang ist es ferner auch von Vorteil, wenn die Reifenseitenwände derart gestaltet werden, daß ihre Dicke von den Schulterbereichen ausgehend bis zu den Wulstbereichen hin kontinuierlich abnimmt.

Um zu verhindern, daß im drucklosen Zustand des Reifens die Reifenwülste ins Tiefbett der Felge rutschen, sollten nur solche Felgen Verwendung finden, die einen entsprechend gestalteten Hump besitzen, beispielsweise, wie dargestellt, Felgen mit asymmetrischen Hump. Alternativ dazu kann auch in Erwägung gezogen werden, durch andere geeignete Mittel ein Halten der Reifenwülste auf den Sitzflächen der Felge zu gewährleisten, beispielsweise durch Ankleben.

Eine weitere Ausführungsform der Erfindung ist in Fig. 3 dargestellt. Bei dieser Ausführungsvariante wird die Biegesteifigkeit der Reifenseitenwände dadurch erfindungsgemäß beeinflußt, daß in jeder Reifenseitenwand zumindest eine, im dargestellten Ausführungsbeispiel zwei, gesonderte Gewebelagen 14, 15. Als Material für diese Gewebelagen kommen textile Corde, wie Rayon, Nylon, Polyester oder auch Aramid in Frage. Die Festigkeitsträger in diesen Gewebelagen 14, 15 sind unter einem Winkel von 20 bis 70° zu den radial verlaufenden Karkassfäden ausgerichtet, wobei bei mehreren Gewebelagen die Festigkeitsträger der Lagen einander kreuzen sollten. Bei der in Fig. 3 dargestellten Ausführungsform ist eine vom Randbereich der breitesten Gürtellage bis knapp oberhalb der Stelle mit der größten Reifenbreite verlaufende Verstärkungslage 14 angeordnet, die auf der Karkasslage positioniert ist. Eine zweite Verstärkungslage 15, die etwa eine Erstreckung von 2/3 der Erstreckung der ersten Verstärkungslage 14 besitzt, ist direkt auf der ersten Verstärkungslage aufgebracht. Die radial äußeren Endbereiche der beiden Verstärkungslagen 14, 15 liegen dabei zumindest im wesentlich auf gleicher Höhe. Zusätzlich kann beispielsweise durch eine Variation der Dicke der Reifenseitenwände sichergestellt werden, daß die Abnahme der Biegesteifigkeit der Seitenwände möglichst gleichmäßig erfolgt.

Es gibt noch eine Anzahl weiterer Möglichkeiten, durch die sich die Biegesteifigkeit der Seitenwand entsprechend beeinflussen läßt. So ist es insbesondere denkbar, ein Verstärkungsprofil mit zumindest einer Verstärkungslage zu kombinieren oder auch mehr als zwei Verstärkungslagen in der Reifenseitenwand anzuordnen. Auch durch die Kombination unterschiedlicher Materialien in einzelnen Verstärkungslagen kann eine entsprechende Beeinflussung der Biegesteifigkeit der Seitenwand erfolgen. Darüber hinaus ist es auch möglich, Verstärkungsprofile so zu gestalten, daß es sich aus zwei oder mehr unterschiedlichen Kautschukmischungen mit verschiedenen Shorehärten zusammensetzen, derart, daß die Biegesteifigkeit im erwünschten Ausmaß und in der erwünschten Art und Weise beeinflußt wird.

## Patentansprüche

1. Fahrzeugluftreifen in Radialbauart mit einer zumindest einlagig ausgeführten Karkasse, die in Wulstbereichen mittels Kernen verankert ist, einem insbesondere mehrlagig ausgeführten Gürtel, einem profilierten Laufstreifen und Seitenwänden, wobei jede Seitenwand zusätzlich zur Karkasse mit zumindest einem Verstärkungsprofil oder zumindest einer Verstärkungslage versteift ist,
**dadurch gekennzeichnet,**
**dass** die Reifenseitenwände (8) von den Wulstbereichen ausgehend vorerst flach unter einem Winkel von 0° bis 20° zur axialen Richtung nach außen verlaufen, und innerhalb ihres zwischen 50 und 90% der Reifenquerschnittshöhe (H) verlaufenden Bereiches am biegesteifsten ausgeführt sind, wobei ihre Biegesteifigkeit vom Gürtel (2) bis zu den Wülsten abnimmt, sodass im eingefederten, drucklosen Zustand des Reifens die Reifenwülste in Kontakt mit der Innenseite des Reifens treten und sich die Reifenseitenwände (8) unter Ausbildung einer vom Untergrund aufwärts gerichteten Seitenwandfalte verformen.

2. Fahrzeugluftreifen nach Anspruch 1, **dadurch gekennzeichnet, dass** die Biegesteifigkeit der Seitenwände (8) vom Gürtel (2) zu den Wülsten, gleichmäßig abnimmt.

3. Fahrzeugluftreifen nach Anspruch 1 oder 2, **dadurch gekennzeichnet, dass** in jeder Seitenwand (8) innerhalb ihres zwischen 50 und 90% der Reifenquerschnittshöhe (H) verlaufenden Bereiches ein Verstärkungsprofil (9) eingebettet ist.

4. Fahrzeugluftreifen nach Anspruch 3, **dadurch gekennzeichnet, dass** das Verstärkungsprofil (9) aus Gummi besteht und eine Shorehärte A größer 70 besitzt.

5. Fahrzeugluftreifen nach Anspruch 3 oder 4, **dadurch gekennzeichnet, dass** das Verstärkungsprofil (9) zwischen Karkasse (4) und Seitenwandgummi angeordnet ist.

6. Fahrzeugluftreifen mit einer mehrlagig ausgeführten Karkasse, nach einem der Ansprüche 3 bis 5, **dadurch gekennzeichnet, dass** das Verstärkungsprofil (9) zwischen zwei Karkasslagen angeordnet ist.

7. Fahrzeugluftreifen Anspruch 1 oder 2, **dadurch gekennzeichnet, dass** in jeder Reifenseitenwand als Verstärkungslage zumindest eine Gewebelage (14, 15) eingebracht ist, deren Verstärkungsfäden oder -corde unter einem spitzen Winkel von insbesondere 20 bis 70° zu den radial verlaufenden Karkassfäden angeordnet sind.

8. Fahrzeugluftreifen nach Anspruch 7, **dadurch gekennzeichnet, dass** mehrere, in radialer Richtung unterschiedlich breite Gewebelagen (14, 15) eingebracht sind.

9. Fahrzeugluftreifen nach einem der Ansprüche 1 bis 8, **dadurch gekennzeichnet, dass** die Dicke der Seitenwände (8) von den Schulterbereichen ausgehend bis zu den Wulstbereichen hin kontinuierlich abnimmt.

10. Fahrzeugluftreifen mit Kernprofilen radial außerhalb der Wulstkerne, nach einem der Ansprüche 1 bis 9, **dadurch gekennzeichnet, dass** die Kernprofile (7) bis auf eine Höhe reichen, die maximal das 2,5-Fache des in dieser Richtung gemessenen Durchmessers des Wulstkernes (5) beträgt.

11. Fahrzeugrad bestehend aus einer Felge und einem Fahrzeugluftreifen, **dadurch gekennzeichnet, dass** der Reifen nach einem oder mehreren der Ansprüche 1 bis 10 ausgeführt ist.

12. Fahrzeugrad bestehend aus einer Felge und einem gemäß einem oder mehreren der Ansprüche 1 bis 10 ausgeführten Fahrzeugluftreifen, **dadurch gekennzeichnet, dass** der Reifen im Bereich der Wulstsitzflächen der Felge im drucklosen Zustand durch Haltemittel, beispielsweise durch asymmetrisch ausgeführte Humps, gehalten wird.

## Claims

1. Pneumatic vehicle tyre of a radial type of construction, including a carcase which has an at least single-ply structure and is secured in bead regions by means of cores, a belt which has more especially a multiple-ply structure, a profiled tread strip and sidewalls, each sidewall being reinforced, in addition to the carcase, with at least one reinforcing profile or at least one reinforcing ply, **characterised in that** the sidewalls (8) of the tyre extend outwardly from the bead regions initially in a gradual manner at an angle of between 0° and 20° relative to the axial direction and have the most bending-resistant structure internally of their region which extends over between 50% and 90% of the cross-sectional height (H) of the tyre, their bending resistance decreasing from the belt (2) to the beads so that, in the compressed, pressureless state of the tyre, the tyre beads come into contact with the inside of the tyre, and the sidewalls (8) of the tyre become deformed so as to form a sidewall fold orientated upwardly from the underlying ground.

2. Pneumatic vehicle tyre according to claim 1, **characterised in that** the bending resistance of the sidewalls (8) decreases uniformly from the belt (2) to the beads.

3. Pneumatic vehicle tyre according to claim 1 or 2, **characterised in that** a reinforcing profile (9) is embedded in each sidewall (8) internally of its region which extends over between 50% and 90% of the cross-sectional height (H) of the tyre.

4. Pneumatic vehicle tyre according to claim 3, **characterised in that** the reinforcing profile (9) is formed from rubber and has a Shore A hardness greater than 70.

5. Pneumatic vehicle tyre according to claim 3 or 4, **characterised in that** the reinforcing profile (9) is disposed between carcase (4) and sidewall rubber.

6. Pneumatic vehicle tyre having a carcase with a multiple-ply structure, according to one of claims 3 to 5, **characterised in that** the reinforcing profile (9) is disposed between two carcase plies.

7. Pneumatic vehicle tyre according to claim 1 or 2, **characterised in that** at least one fabric ply (14, 15) is introduced as the reinforcing ply in each sidewall of the tyre, the reinforcing filaments or cores of said fabric ply being disposed at an acute angle of, more especially, 20° to 70° relative to the radially extending carcase filaments.

8. Pneumatic vehicle tyre according to claim 7, **characterised in that** a plurality of fabric plies (14, 15), which have variable widths when viewed with respect to the radial direction, are introduced.

9. Pneumatic vehicle tyre according to one of claims 1 to 8, **characterised in that** the thickness of the sidewalls (8) decreases continuously from the shoulder regions to the bead regions.

10. Pneumatic vehicle tyre having core profiles radially externally of the bead cores, according to one of claims 1 to 9, **characterised in that** the core profiles (7) extend to a maximum height of 2.5-times the diameter of the bead core (5), when said diameter is measured in this direction.

11. Vehicle wheel, comprising a rim and a pneumatic vehicle tyre, **characterised in that** the tyre is configured according to one or more of claims 1 to 10.

12. Vehicle wheel, comprising a rim and a pneumatic vehicle tyre, which is configured according to one or more of claims 1 to 10, **characterised in that** the tyre is retained in the region of the bead seating areas of the rim, in the pressureless state, by retaining means, for example by asymmetrically configured humps.

## Revendications

1. Pneumatique pour véhicule du type à structure radiale comportant une carcasse formée d'au moins une couche et qui est ancrée dans des zones de talons à l'aide de tringles, une ceinture notamment formée de plusieurs couches, une bande de roulement sculptée et des parois latérales, chaque paroi latérale étant rigidifiée, en plus de la carcasse, avec au moins un profilé de renfort ou au moins une couche de renfort, **caractérisé en ce que** les parois latérales (8) du pneumatique s'étendent vers l'extérieur tout d'abord à plat à partir des zones du talon en faisant un angle compris entre 0° et 20° par rapport à la direction axiale et sont agencés de manière à présenter une résistance maximale à la flexion à l'intérieur d'une zone qui s'étend entre 50 et 90 % de la hauteur en coupe transversale (H) du pneumatique, leur résistance à la flexion diminuant depuis la ceinture (2) jusqu'aux talons de telle sorte que lorsque le pneumatique est à l'état fléchi élastiquement sans pression, les talons du pneumatique viennent en contact avec la face intérieure du pneumatique et les parois latérales (8) du pneumatique se déforment en formant un pli de paroi latérale qui est dirigé vers le haut à partir du sol.

2. Pneumatique pour véhicule selon la revendication 1, **caractérisé en ce que** la résistance à la flexion des parois latérales (8) diminue de façon uniforme depuis la ceinture (2) en direction des talons.

3. Pneumatique pour véhicule selon la revendication 1 ou 2, **caractérisé en ce qu'**un profilé de renfort (9) est inséré dans chaque paroi latérale (8) à l'intérieur d'une zone s'étendant entre 50 et 90 % de la hauteur en coupe transversale (H) du pneumatique.

4. Pneumatique pour véhicule selon la revendication 3, **caractérisé en ce que** le profilé de renfort (9) est formé de caoutchouc et possède une dureté Shore A supérieure à 70.

5. Pneumatique pour véhicule selon la revendication 3 ou 4, **caractérisé en ce que** le profilé de renfort (9) est disposé entre la carcasse (4) et le caoutchouc de la paroi latérale.

6. Pneumatique pour véhicule comportant une carcasse formée de plusieurs couches, selon l'une des revendications 3 à 5, **caractérisé en ce que** le profilé de renfort (9) est disposé entre deux couches de la carcasse.

7. Pneumatique pour véhicule selon la revendication 1 ou 2, **caractérisé en ce que** dans chaque paroi latérale du pneumatique est insérée, en tant que couche de renfort, au moins une couche de tissu (14, 15), dont les fils ou câblés de renfort sont disposés en faisant un angle aigu compris notamment entre 20 et 70° par rapport aux fils radiaux de la carcasse.

8. Pneumatique pour véhicule selon la revendication 7, **caractérisé en ce que** plusieurs couches de tissu (14,15) ayant des largeurs différentes dans la direction radiale, sont prévues.

9. Pneumatique pour véhicule selon l'une des revendications 1 à 8, **caractérisé en ce que** l'épaisseur des parois latérales (8) diminue continument depuis les zones d'épaulement en direction des zones des talons.

10. Pneumatique pour véhicule comportant des profilés de tringles situés radialement à l'extérieur des tringles des talons selon l'une des revendications 1 à 9, **caractérisé en ce que** les profilés (7) des tringles s'étendent jusqu'à une hauteur, qui est égale au maximum à 2,5 fois le diamètre de la tringle (5) du talon, mesuré dans cette direction.

11. Roue de véhicule constituée d'une jante et d'un pneumatique pour véhicule, **caractérisée en ce que** le pneumatique est agencé selon une ou plusieurs des revendications 1 à 10.

12. Roue de véhicule constituée par une jante et un pneumatique pour véhicule réalisé selon une ou plusieurs des revendications 1 à 10, **caractérisé en ce que** le pneumatique est retenu, dans la zone des surfaces d'appui de talons de la jante, à l'état sans pression, par des moyens de retenue, par exemple par des bourrelets agencés de façon dissymétrique.
